# EUROPÄISCHE PATENTANMELDUNG

(11) **EP 2 581 916 A1**
(43) Veröffentlichungstag der Anmeldung: **17.04.2013**
(21) Anmeldenummer: 11185277.8
(22) Anmeldetag: 14.10.2011
(51) Int. Cl.: H01B 7/00, H01B 7/29, F02C 7/266

(54) **Zündkabel für hohe mechanische und/oder thermische Belastungen**

(71) Anmelder: Siemens Aktiengesellschaft, 80333 München (DE)
(72) Erfinder: Braun, Gilbert, 52134 Herzogenrath (DE); Pahl, Andreas, 40589 Düsseldorf (DE); Stöcker, Helmut, 44267 Dortmund (DE)

(57) **Zusammenfassung**

Die Erfindung betrifft ein Zündkabel (10) für hohe mechanische und/oder thermische Belastungen angegeben, welches umfasst zwei Enden (12) zum elektrischen Kontaktieren des Zündkabels (10) in einen Zündkreis, einen die beiden Enden (12) verbindende elektrischen Leiter (20) und eine den elektrischen Leiter (20) umgebende Ummantelung (22). Um ein mechanisch sowie thermisch besonders belastbares Zündkabel (10) anzugeben wird vorgeschlagen, dass die Ummantelung (22) schichtweise ausgeführt ist und zumindest eine erste Schicht (21) aus Glimmer und eine die erste Schicht umgebende zweite Schicht (24) aus Glasfasern umfasst.

## Beschreibung

Die Erfindung betrifft ein Zündkabel gemäß dem Oberbegriff von Anspruch 1.

Aus der EP 1 881 183 A1 ist ein Zündkabel für den Zünder einer stationären Gasturbine bekannt, dessen elektrisch leitende Ader mit Hilfe eines Glasseiden-Geflecht isoliert ist.

Es hat sich jedoch herausgestellt, dass derartige Zündkabel, wenn sie in der Umgebung von Brennern stationärer Gasturbinen eingesetzt werden, besonders hohen mechanischen und thermischen Belastungen standhalten müssen. Insbesondere bei brennernah verlegten Zündkabeln müssen diese Temperaturen von bis zu 450°C dauerhaft standhalten.

Neben der vorgenannten Glasseiden-Geflecht-Isolierung können derartige Hochspannungszündkabel auch mit unterschiedlichen Kunststoffen isoliert werden. Diese sind jedoch nur bis etwa 250°C temperaturfest. Als weiteres Problem hat sich herausgestellt, dass, wenn die elektrisch leitende Ader aus Kupfer hergestellt ist, diese bei derartig hohen Einsatztemperaturen zum Verzundern neigt. Dadurch werden die Übergangswiderstände an den Kontaktstellen erhöht, was zu Störungen im Zündbetrieb führen kann. Häufig werden deswegen die Kupferleiter mit Zinn, Silber oder Nickel beschichtet, um die Verzunderung einzuschränken. zudem ist die mechanische Festigkeit von Kupfer begrenzt, wodurch die Eignung derartiger Zündkabel in stationären Gasturbinen nur eingeschränkt gegeben ist.

Aufgabe der Erfindung ist daher die Bereitstellung eines Zündkabels für Hochspannungszündkreise in thermisch hochbelasteten Umgebungen, wie sie beispielsweise im brennernahen Bereich einer stationären Gasturbine auftreten.

Die Aufgabe wird mit einem Zündkabel gemäß den Merkmalen des Anspruchs 1 gelöst. Vorteilhafte Ausgestaltungen des Zündkabels sind in den abhängigen Ansprüchen angegeben, die in beliebiger Weise miteinander kombiniert werden können.

Erfindungsgemäß ist vorgesehen, dass die Ummantelung des elektrischen Leiters des Zündkabels schichtweise ausgebildet ist und zumindest eine erste Schicht mit Glimmer und eine die erste Schicht umgebende zweite Schicht aus Glasfasern umfasst. Durch den schichtweisen Aufbau lassen sich insbesondere zwei unterschiedliche Materialien zur Isolierung und zum Schutz des elektrischen Leiters einsetzen. Für die eine Schicht wird als hauptsächlicher Isolierungsbestandteil Glimmer verwendet, was die Durchschlagfestigkeit des Zündkabels signifikant erhöht. Des Weiteren ermöglicht eine aus Glasseiden-Geflecht ausgebildete zweite Schicht die erforderliche Hochspannungsfestigkeit auch bei wesentlich höheren Einsatztemperaturen bis etwa 450°C. Zudem schützt die zweite Schicht die Glimmer-Schicht vor mechanischen Beschädigungen und vor dem partiellen Verlust von Bruchstücken der ersten Schicht.

Gemäß einer ersten vorteilhaften Ausgestaltung umfasst die Ummantelung eine erste weitere Schicht aus Glasfasern, welche zwischen dem elektrischen Leiter und der ersten Schicht angeordnet ist. Mit Hilfe dieser weiteren Schicht wird der elektrische Leiter vor den mechanischen Einflüssen der ersten Schicht aus Glimmer geschützt, was zur uneingeschränkten Aufrechterhaltung der elektrischen Leitfähigkeit führt. Dies gilt insbesondere, wenn das Zündkabel mechanischen Schwingungen zeitweise ausgesetzt sein kann.

Weiter bevorzugt umfasst die Ummantelung eine zweite weitere Schicht aus einem Metall-Geflecht, aus einem Metall-Wellrohr oder aus einem Aramid-Geflecht, welche die zweite Schicht umgibt. Mit Hilfe dieser Maßnahme kann die elektrische Isolierung vor mechanischen Belastungen wirksam geschützt werden. Besonders bevorzugt ist die Verwendung eines Aramid-Geflechts, da dieses bei hoher mechanischer Festigkeit nicht elektrisch leitend ist. Wenn als Schutz vor mechanischer Belastung die zweite weitere Schicht aus einem Metall besteht - beispielsweise einem Edelstahl-Geflecht, einem Stahldraht-Geflecht oder einem Edelstahl-Wellrohr -, ist dieses von den elektrisch leitenden Enden des Zündkabels axial beabstandet (nicht elektrisch verbunden). Dies verhindert den elektrischen Kontakt der zweiten weiteren Schicht mit dem elektrischen Anschluss des Zündkabels, so dass trotz der Verwendung eines metallischen Schutzmantels das Zündkabel mit benachbarten Bauteilen in Kontakt kommen kann, ohne dass die Gefahr besteht, den Zündkreislauf über das andere Bauteil kurzzuschließen. Mit Hilfe der vorgenannten Ausgestaltung ist das Zündkabel besonders wirksam gegen mechanische Beschädigungen von außen geschützt. Dabei ist es unerheblich, dass die zweite weitere Schicht von den elektrisch leitenden Enden des Zündkabels axial beabstandet ist, da im freiliegenden Abschnitt davon auszugehen ist, dass dort keine anderen Bauteile angesiedelt sind, vor denen ein mechanischer Schutz erforderlich wäre.

Um eine besonders hohe thermische Belastung des Leiterwerkstoffs zu ermöglichen, ist vorgesehen, dass der elektrische Leiter als Edelstahl-Litze ausgebildet ist und an zumindest einem Ende ein Kabelschuh vorgesehen ist, welcher mit dem elektrischen Leiter verschweißt ist. Edelstahl widersteht dauerhaft den thermischen Belastungen der Umgebung des Zündkabels, insbesondere beim Einsatz in einer stationären Gasturbine. Obwohl Edelstahl nur eine eingeschränkte elektrische Leitfähigkeit aufweist, kann die Verwendung des Materials für vergleichsweise kurze Zündkabel (< 1,6 m) dennoch geeignet sein, da ein Zündstrom im Vergleich zur Betriebsdauer einer Gasturbine höchst selten fließt.

Um gleichzeitig eine sichere Verbindung und gute Anschlussmöglichkeit des Zündkabels zu gewährleisten, sind an den Enden des elektrischen Leiters Kabelschuhe vorgesehen, die mit dem elektrischen Leiter und insbesondere mit der Edelstahl-Litze verschweißt sind.

Um ein Auffächern der Geflechte - aus Glasfasern, Edelstahl oder Stahldraht - zu verhindern, sind an den entsprechenden axialen Enden der einzelnen Geflechte Schutzhülsen bzw. (Quetsch-)Ringe vorgesehen. Des Weiteren verhindern die Hülsen bzw. die Ringe die axiale Verschiebung der unterschiedlichen Ummantelungsschichten entlang des elektrischen Leiters.

Vorzugsweise wird das voranbeschriebene Zündkabel im Zündkreis einer stationären Gasturbine verwendet, bei denen aufgrund von Vibrationen eine hohe mechanische Belastbarkeit und aufgrund der im Betrieb der Gasturbine auftretenden Temperaturen eine vergleichsweise hohe thermische Beständigkeit von etwa 300°C bis etwa 450°C erforderlich ist.

Vorteilhafte Ausgestaltungen sowie weitere Merkmale und Vorteile werden in der nachfolgenden Zeichnung näher erläutert. Es zeigen:
- FIG 1: eine perspektivische Darstellung eines Endes eines Zündkabels mit einem Kabelschuh und
- FIG 2: den Längsschnitt durch eine alternative Ausgestaltung eines Zündkabels an einem der beiden Enden.

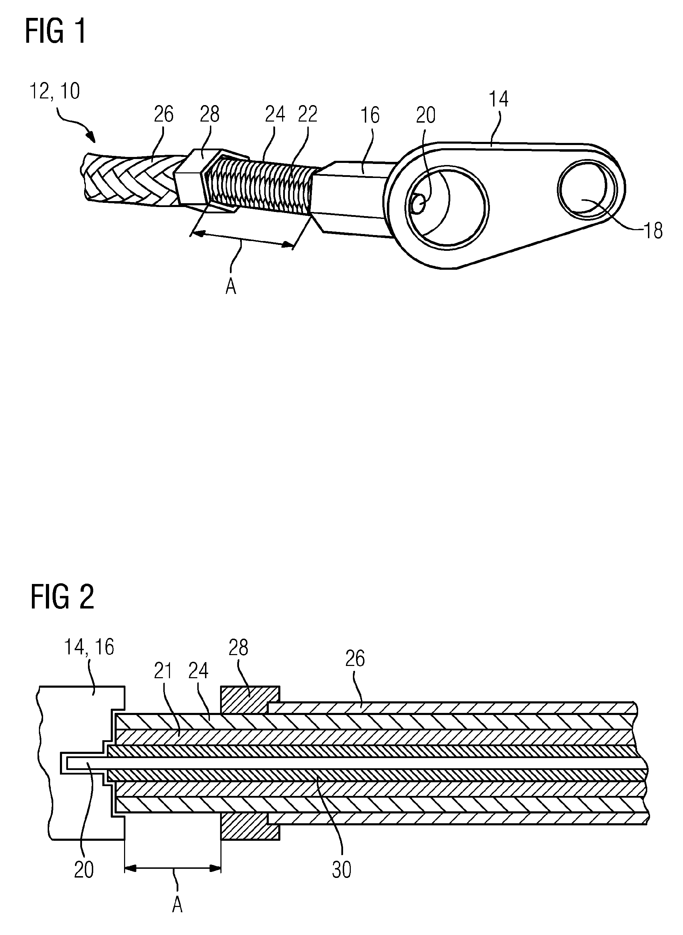

FIG 1 zeigt in perspektivischer Darstellung eines der beiden Enden 12 eines Zündkabels 10, welches zum Einsatz in einer stationären Gasturbine bei hohen Umgebungstemperaturen und/oder hohen mechanischen Belastungen vorgesehen ist. Das Kabelende 12 umfasst eine metallische Schutzhülse 16 mit einem daran angeschweißtem Kabelschuh 14. Im Kabelschuh 14 ist eine Öffnung 18 zum Anschließen des Zündkabels 10 in einem Zündkreis vorgesehen. In der Hülse 16 mündet ein elektrischer Leiter 20 sowie eine den elektrischen Leiter 20 umgebende Ummantelung 22. Der elektrische Leiter 20 ist mit der Hülse 16 verschweißt. Ebenso gut könnte der elektrische Leiter auch mit dem Kabelschuh 14 verschweißt sein.

Der elektrische Leiter 20 kann auch als Ader bezeichnet werden. Die Ummantelung 22 ist schichtweise ausgebildet und umfasst eine erste Schicht und eine die erste Schicht umgebende zweite Schicht 24 aus einem Glasfaser-Geflecht. Die erste Schicht ist in FIG 1 nicht ersichtlich. Das Zündkabel 10 gemäß des in FIG 1 dargestellten Ausführungsbeispiels umfasst des Weiteren ein Edelstahl-Geflecht 26 als weiteres Teil der Ummantelung. Das Edelstahl-Geflecht 26 ist mit Hilfe eines Quetschrings 28 gegen Auffächern gesichert. Zwischen dem Quetschring 28 bzw. dem einen Ende des Edelstahl-Geflechts 26 und der Hülse 16 ist ein axialer Abstand A vorgesehen, der von der Zündspannung abhängt und mit zunehmender Zündspannung größer wird. Durch den ausreichend großen Abstand A wird vermieden, dass durch Funkenübersprünge oder Kriechströme auf die weitere Schicht 26 die Funktion des Zündkabels 10 beeinträchtigt wird, so dass trotz der elektrisch leitenden Eigenschaft der weiteren Schicht 26 diese gegenüber dem elektrischen Leiter 20 hinreichend isoliert ist. Insofern werden die Mindestabstände für Luft- und Kriechstrecken eingehalten. Insbesondere durch die weitere Schicht 26 ist die elektrische Isolierung des Zündkabels 10 vor mechanischen Beschädigungen - sei es durch den Betrieb oder durch die Handhabung - geschützt.

FIG 2 zeigt den Querschnitt durch ein Ende 12 eines Zündkabels 10 für hohe mechanische und/oder thermische Belastungen in einer alternativen Ausgestaltung. Im Zentrum des Zündkabels 10 ist der elektrische Leiter 20 angesiedelt, der mit einem Kabelschuh 14 bzw. einer Hülse 16 elektrisch leitend fest verbunden ist. Der elektrische Leiter 20 ist ummantelt. Die Ummantelung 26 umfasst die erste Schicht 21 und eine diese umgebende zweite Schicht 24. Die erste Schicht 21 besteht hauptsächlich aus Glimmer. Die zweite Schicht besteht aus Glasfasern, die geflechtartig - also kreuzweise -die erste Schicht 21 umgeben und beispielsweise unter dem Markennamen Refrasil kommerziell erhältlich ist. Im Unterschied zur Ausgestaltung nach FIG 1 ist zwischen der ersten Schicht 21 und dem elektrischen Leiter 20 eine erste weitere Schicht 30 aus Glasfasern oder einem Glasfaser-Geflecht vorgesehen, welches mechanischen Beschädigungen des elektrischen Leiters 20 durch den Glimmer verhindern soll. Die erste Schicht 21, die zweite Schicht 24 und die erste weitere Schicht 30 enden in der Hülse 16, um eine Isolierung des elektrischen Leiters 20 über dessen vollständige Länge - abgesehen vom in der Hülse befestigten Abschnitt - zu gewährleisten.

Die zweite Schicht 24 ist von einer zweiten weiteren Schicht 26 umgeben, die in diesem Ausführungsbeispiel aus einem Aramid-Geflecht besteht. In diesem Fall, wenn die zweite weitere Schicht 26 nicht elektrisch leitfähig ist, ist es ein Kostenvorteil, wenn zwischen dem Kabelschuh 14 bzw. der Hülse 16 und der zweiten weiteren Schicht 26 ein axialer Abstand A vorgesehen ist. Diese Maßnahmen ist möglich, da in diesem Abstand A in der Regel eine Beschädigung des in einer Gasturbine verwendeten Zündkabels 10 durch andere Bauteile nicht zu erwarten ist.

Die das Zündkabel 10 möglicherweise schädigenden mechanischen Einflüsse können beispielsweise durch Schwingungen im Betrieb oder durch unsachgemäße Handhabung bei Montage- oder Revisionsarbeiten auftreten.

Das Zündkabel 10 wird so gefertigt, dass zuerst der elektrische Leiter 20 mit der Schutzhülse 16 versehen wird und die Quetschverbindung erfolgt. Danach wird die sichere mechanische Verbindung durch Schweißen erzielt. Vorzugsweise wird ein Laser-Schweiß-Verfahren eingesetzt, um den Wärmeeintrag gering zu halten, so dass keine Beschädigung an dem elektrischen Leiter 10 auftritt.

Selbstverständlich kann bei dem Zündkabel 10 nach FIG 2 die erste weitere Schicht 30 oder die zweite weitere Schicht 26 auch entfallen.

Insgesamt wird mit der Erfindung ein Zündkabel 10 für hohe mechanische und/oder thermische Belastungen angegeben, welches zwei Enden 12 zum elektrischen Kontaktieren des Zündkabels 10 in einen Zündkreis, einen die beiden Enden 12 verbindenden elektrischen Leiter 20 und eine den elektrischen Leiter 20 umgebende Ummantelung 22 umfasst. Um ein mechanisch sowie thermisch besonders belastbares Zündkabel 10 anzugeben, wird vorgeschlagen, dass die Ummantelung 22 schichtweise ausgeführt ist und zumindest eine erste Schicht 21 mit Glimmer und eine die erste Schicht umgebende zweite Schicht 24 aus Glasfasern umfasst.

## Patentansprüche

1. Zündkabel (10) für hohe mechanische und/oder thermische Belastungen,
umfassend:
zwei Enden (12) zum elektrischen Kontaktieren des Zündkabels (10) in einen Zündkreis,
einen die beiden Enden (12) verbindenden elektrischen Leiter (20) (Ader) und
eine den elektrischen Leiter (20) umgebende Ummantelung (22),
**dadurch gekennzeichnet, dass**
die Ummantelung (22) schichtweise ausgebildet ist und zumindest eine erste Schicht (21) mit Glimmer und eine die erste Schicht (21) umgebende zweite Schicht (24) aus Glasfasern umfasst.

2. Zündkabel (10) nach Anspruch 1,
bei dem die Ummantelung (22) eine erste weitere Schicht (30) aus Glasfasern umfasst, welche zwischen dem elektrischen Leiter (20) und der ersten Schicht (21) angeordnet ist.

3. Zündkabel (10) nach Anspruch 1 oder 2,
bei dem die Ummantelung (22) eine zweite weitere Schicht (26)
aus einem Edelstahl-Geflecht,
aus einem Stahldraht-Geflecht,
aus einem Edelstahl-Wellrohr oder
aus einem Aramid-Geflecht
umfasst, welche die zweite Schicht (24) umgibt.

4. Zündkabel (10) nach Anspruch 1, 2 oder 3,
bei dem der elektrische Leiter (20) im Wesentlichen als Edelstahl-Litze ausgebildet ist und an zumindest einem Ende ein Kabelschuh (14) aufweist, welcher mit dem elektrischen Leiter (20) verschweißt ist.

5. Zündkabel (10) nach Anspruch 4,
bei dem der Kabelschuh (14) eine Schutzhülse (16) umfasst, die die Glasfasern der ersten Schicht (21) gegen Auffächern sichern.

6. Zündkabel (10) nach einem der Ansprüche 1 bis 5,
bei dem die zweite Schicht (24) von den elektrisch leitenden Enden (12) des Zündkabels (10) axial beabstandet ist.

7. Zündkabel (10) nach Anspruch 3 und nach einem der Ansprüche 1 bis 6,
bei dem die zweite weitere Schicht (26) von den elektrisch leitenden Enden (12) des Zündkabels (10) axial beabstandet ist.

8. Zündkabel (10) nach einem der Ansprüche 1 bis 7,
bei dem die Enden (12) der zweiten Schicht (24) bzw. der zweiten weiteren (26) Schicht durch einen (Quetsch-)Ring (28) gegen Auffächern gesichert sind.
